# FASCICULE DE BREVET EUROPEEN

(11) **EP 3 387 722 B1**
(45) Date de publication et mention de la délivrance du brevet: **11.03.2020**
(21) Numéro de dépôt: 16806084.6
(22) Date de dépôt: 05.12.2016
(51) Int. Cl.: H02B 13/065

(54) **SYSTEME DE MAINTIEN ET ENSEMBLE DE CAPTEUR UHF**
TRÄGERSYSTEM UND UHF SENSOR
HOLDING SYSTEM AND UHF SENSOR DEVICE

(30) Priorité: 08.12.2015 FR 1562009
(43) Date de publication de la demande: 17.10.2018
(73) Titulaire: General Electric Technology GmbH, 5400 Baden (CH)
(72) Inventeur: MAUFFREY, Thibaut, 74000 Annecy (FR); FAUCONNET, Gilles, 38190 Froges (FR); VUACHET, Jacques, 74330 Annecy (FR)
(74) Mandataire: Brevalex
(86) Numéro de dépôt international: PCT/EP2016/079768
(87) Numéro de publication internationale: WO 2017/097710

(56) Documents cités:
- EP-A1- 2 685 268
- US-A1- 2010 084 187

## Description

### DOMAINE TECHNIQUE

L'invention se rapporte au domaine de l'équipement des postes électriques à haute tension par des capteurs ultra Haute Fréquence ou UHF et concerne plus particulièrement la fixation de ces capteurs UHF sur lesdits postes électriques à haute tension.

### ÉTAT DE LA TECHNIQUE ANTÉRIEURE

La surveillance et l'entretien des postes électriques à haute tension, et notamment ceux sous enveloppe métallique, nécessitent l'utilisation de capteurs Ultra Haute Fréquence (UHF), également connu sous la dénomination d'antennes UHF. En effet, ces capteurs UHF peuvent notamment permettre de détecter la présence d'éventuelles décharges partielles caractéristiques d'un défaut d'isolement dans l'enceinte du poste électrique.

Si ces capteurs UHF peuvent être installés à demeure dans l'enceinte d'un poste électrique, il est généralement plus économique de les installer sur les hublots de ce poste électrique lors des opérations de maintenance. Ceci est d'autant plus vrai pour les anciens postes électriques pour lesquels il n'est pas prévu, outre les hublots, de moyen d'installation de tels capteurs UHF. Ainsi, une telle installation offre la possibilité d'un contrôle et/ou d'une maintenance de ces capteurs UHF sans nécessiter une couteuse opération d'ouverture de l'enceinte du poste électrique.

Le document EP 2685268 A1 fourni un exemple d'une telle installation d'un capteur UHF au niveau d'un hublot d'un poste électrique ceci au moyen d'un système de maintien d'un capteur UHF.

Un tel hublot du poste électrique est une pièce fermant hermétiquement une ouverture ménagée dans l'enceinte du poste électrique et qui permet une inspection, notamment visuelle, de cette dernière sans avoir à ouvrir l'enceinte. Un tel hublot peut par exemple être réalisé dans un matériau transparent dans les longueurs d'onde du visible et au rayonnement UHF, tel qu'un verre sécuritaire ou un polymère comme le poly(méthacrylate de méthyle). La fixation du hublot sur l'ouverture ménagée dans l'enceinte du poste est généralement réalisée au moyen d'un support, tel qu'une bride.

Le système de maintien divulgué par le document EP 2685268 A1 comporte, en référence à sa figure 2 :
- un élément de fixation (S), destiné à être fixé sur le poste électrique sur le support (F) en regard de ce dernier, ledit élément de fixation (S) comportant une ouverture donnant accès au hublot lorsqu'il est fixé sur le poste électrique, cette ouverture formant un logement logeant le capteur UHF (C),
- un anneau de pression (F3) du capteur UHF (C), également logé dans le logement formé par l'ouverture de l'élément de fixation (S), l'anneau de pression (F3) étant agencé dans logement pour appuyer le capteur UHF (C) contre la surface du hublot (H).

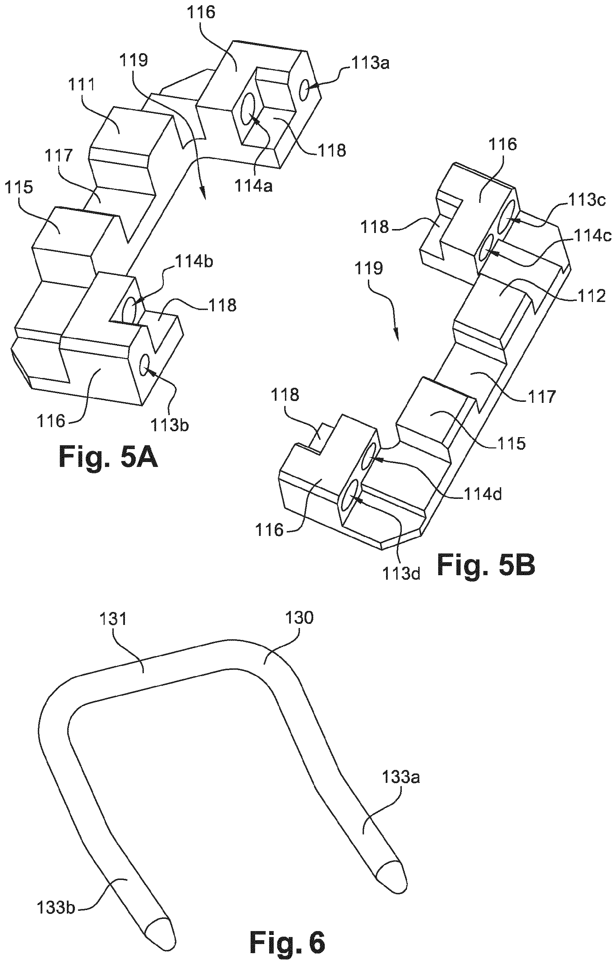

Le montage de l'élément de fixation (S) sur le support (F) est obtenu, comme le montre le figure 5 de ce même document, au moyen d'un système de plot (B) contraint élastiquement sur le pourtour du support (F).

Lors de l'installation d'un capteur UHF (C) sur un poste électrique, l'élément de fixation est équipé par vissage de l'anneau de pression (F) dans le logement pour capteur UHF (C). Le capteur UHF est ensuite disposé dans ce même logement et vissé à l'élément de fixation. Une fois cette l'installation du capteur UHF (C) réalisée, l'élément de fixation (S) est ensuite mis en place sur le support (F), le capteur UHF mis en appui par l'anneau de pression (F3) sur la surface du hublot (H) .

Si un tel système de maintien permet une installation adéquate d'un capteur UHF en contact d'un hublot d'un poste électrique tout en offrant un accès rapide au hublot par le montage manuel du système de maintien, il présente un certain nombre d'inconvénients.

En effet, un technicien devant intervenir sur un poste électrique non pourvu de capteur UHF devra forcément se munir d'un système de maintien adapté pour ce poste électrique et notamment à la forme du hublot et du support d'hublot équipant ledit poste électrique.

De plus, l'installation du système de maintien divulgué dans le document EP 2685268 A1 ne peut pas se faire sur les hublots se trouvant orientés vers le bas en raison du système de plot (B) peu compatible avec un tel positionnement.

On notera qu'un inconvénient secondaire d'un tel système de maintien est son non adaptation pour une installation en extérieur. En effet, un capteur maintenu par un tel système de maintien ne présente aucune protection contre les intempéries et le capteur UHF maintenu par un tel système risque de s'endommager en cas de pluie ou de forte humidité.

### EXPOSÉ DE L'INVENTION

L'invention vise à remédier à au moins une partie de ces inconvénients et a ainsi notamment pour objet de fournir un système de maintien permettant à un technicien l'installation d'un capteur UHF sur un poste sans nécessiter l'utilisation d'outillage tout en laissant accessible le hublot du poste sur lequel le capteur UHF pourra être installé.

L'invention a également pour objet de fournir un système de maintien qui nécessite peu d'adaptation vis-à-vis du hublot et de son support.

L'invention concerne à cet effet un système de maintien d'un capteur ultra haute fréquence (UHF) sur un hublot de poste électrique à haute tension, ledit hublot étant fixé sur le reste du poste électrique au moyen d'un support, tel qu'une bride, du poste électrique,

le système de maintien comportant :
- au moins un élément de fixation, destiné à être fixé sur le poste électrique en regard du support, ledit élément de fixation comportant une ouverture donnant accès au hublot lorsqu'il est fixé sur le poste électrique,
le système de maintien comportant en outre :
- une pièce de maintien de capteur UHF configurée pour loger au moins partiellement le capteur UHF, la pièce de maintien étant en outre configurée pour être placée dans l'ouverture de l'élément de fixation et pour maintenir le capteur UHF en position vis-à-vis du hublot, et
- au moins un organe de verrouillage pour verrouiller en position la pièce de maintien sur l'élément de fixation lorsque la pièce de maintien est placée dans l'ouverture de l'élément de fixation, ledit organe de verrouillage étant configuré pour permettre un verrouillage manuel en position de la pièce de maintien dans l'ouverture de l'élément de fixation.

Avec un tel système de maintien, la fixation sur le support de la pièce de fixation peut être une fixation pérenne sans que l'accès au hublot soit entravé. En effet, un simple retrait de la pièce de maintien après déverrouillage manuel de l'organe de verrouillage libère l'accès au hublot. De la même façon, avec un tel déverrouillage manuel, un technicien à directement accès au capteur UHF et est donc à même d'intervenir directement sur le capteur UHF sans nécessiter d'outillage particulier.

Ainsi, il est possible de préinstaller l'élément de fixation sur le hublot du poste, le hublot du poste restant accessible par l'ouverture de l'élément de fixation. Lorsque le technicien doit installer sur site le capteur UHF, il n'a besoin de se munir que de la pièce de maintien, du capteur UHF et, si l'organe de verrouillage n'est pas monté sur l'élément de fixation, de ce dernier. Aucun outillage particulier ne sera donc nécessaire pour installer le capteur sur le hublot du poste.

Qui plus est, avec un tel système de maintien, seul l'élément de fixation a à être adapté pour la forme du hublot et de son support. Ainsi il est parfaitement envisageable, avec un tel système de maintien, de pré-équiper les postes électriques d'éléments de fixation présentant des configurations adaptées aux différents hublots et à leurs supports. De tels éléments supports peuvent alors présenter une ouverture standard adaptée pour le placement d'une pièce de maintien standard. Ainsi, un technicien ayant à intervenir sur un poste électrique n'aura besoin pour intervenir sur ce poste électrique que de cette pièce de maintien standard équipée d'un capteur UHF lui-même standard et d'un organe de verrouillage, si ce dernier n'est pas monté sur l'élément de fixation.

Le système de maintien peut être destiné à maintenir un capteur UHF sur un hublot faisant saillie du support, l'élément de fixation étant configuré pour se fixer sur le pourtour du hublot.

Une telle configuration de l'élément de fixation permet de limiter les risques d'endommagement du hublot et des écrous utilisés pour fixer le hublot sur son support.

L'élément de fixation peut comporter une première et une deuxième mâchoire de retenue configurées pour se fixer sur le hublot en l'enserrant.

Une telle configuration de l'élément de fixation permet de faciliter sa fixation sur le support de hublot.

La première et la deuxième mâchoire de retenue peuvent être reliées l'une à l'autre par un lien déformable.

De cette manière la première et la deuxième mâchoire de retenue peuvent être placées sur le support en appliquant une déformation sur le lien déformable, le relâchement de cette déformation permettant d'assurer un maintien en place des mâchoires de retenue sur le support.

L'élément de fixation et la pièce de maintien comprennent chacun au moins un orifice de passage pour le passage du premier organe de verrouillage, le verrouillage en position de la pièce de maintien sur l'élément de fixation se faisant par insertion d'une partie du premier organe de verrouillage, dite tige de verrouillage, dans lesdits orifices de passage.

De cette manière le verrouillage de la pièce de maintien sur l'élément de fixation peut être obtenu par une simple introduction de la tige de verrouillage dans les orifices de passage.

Le premier organe de verrouillage est monté mobile sur l'élément de fixation entre au moins une première position dans laquelle il laisse libre l'ouverture pour autoriser le placement de l'élément de fixation dans ladite ouverture et une deuxième position de verrouillage dans laquelle le premier organe de verrouillage verrouille en position la pièce de maintien dans l'ouverture de l'élément de fixation.

Un tel montage de l'organe de verrouillage sur l'élément de fixation permet à technicien venant intervenir sur un poste équipé de l'élément de fixation de devoir s'équiper uniquement de la pièce de maintien et du capteur de UHF sans avoir à prévoir un organe de verrouillage.

Le système de maintien peut comprendre au moins un deuxième organe de verrouillage, le premier et le deuxième organe de verrouillage étant montés mobiles entre la première et la deuxième position sur respectivement la première et la deuxième mâchoire de retenue.

La pièce de maintien peut être configurée pour loger au moins une partie du capteur UHF enfermée hermétiquement lorsque le capteur UHF est fixé par le système de maintien sur le hublot.

La notion d'herméticité doit s'entendre ici et dans le reste de ce document en relation avec l'eau. Ainsi quand il est indiqué que la partie du capteur UHF est enfermée hermétiquement, il doit être entendu que cette même partie de capteur UHF est enfermée hermétiquement à l'eau, autrement dit, de manière étanche.

Avec une telle pièce de maintien, le système de maintien est particulièrement adapté pour être installé sur un poste se trouvant en extérieur. En effet, le capteur UHF ainsi logé dans la pièce de maintien sera protégé des intempéries et notamment de la pluie.

L'élément de fixation peut comporter des moyens de positionnement pour positionner la pièce de maintien lors de son placement dans l'ouverture.

La pièce de maintien est configurée pour permettre une fixation du capteur UHF lorsqu'il est au moins partiellement logé dans la pièce de maintien.

Avec une telle configuration, il est possible de fournir des kits de mesure UHF comportant une pièce de maintien et un capteur UHF avec le capteur fixé sur ladite pièce de maintien. De cette manière, le technicien devant faire un contrôle sur un poste électrique à haute tension équipé de l'élément de fixation, n'a besoin de s'équiper que du kit et de l'organe de verrouillage.

L'invention concerne également un ensemble de capteur UHF comportant :
- un capteur UHF,
- un système de maintien du capteur UHF sur un hublot d'un poste électrique haute tension, ledit hublot étant fixé au reste du poste électrique au moyen d'un support, tel qu'une bride, du poste électrique,
le système de maintien étant un système selon l'invention.

Un tel ensemble bénéficie des avantages liés au système de maintien selon l'invention.

La pièce de maintien peut délimiter un logement pour le capteur UHF et la pièce de maintien et le capteur UHF peuvent être conformés pour fermer hermétiquement le logement lorsque l'ensemble de capteur UHF est installé sur le poste électrique.

Un tel logement étanche du capteur UHF permet de le protéger contre les intempéries lorsque le capteur UHF est installé sur un poste électrique en extérieur. Les risques d'endommagement du capteur UHF en sont fortement réduits.
le capteur UHF peut comporter un corps de capteur,
la pièce de maintien peut comporter :
- une embase par laquelle la pièce de maintien est placée dans l'ouverture, et
- un manchon s'étendant à partir de l'embase et délimitant un logement pour le corps de capteur présentant une première et deuxième ouverture,
et, le corps de capteur peut comporter un premier joint pour s'interposer entre le reste du corps de capteur et la paroi du logement de manière à fermer hermétiquement la première ouverture du logement,
l'embase comportant un deuxième joint agencé pour venir en appui sur la surface du hublot de manière à fermer hermétiquement la deuxième ouverture du logement.
le capteur peut comporter un corps de capteur et une portion d'appui qui s'étend à partir du corps de capteur,
la pièce de maintien comportant une ouverture centrale pour loger le corps de capteur de manière à ce que lors de la mise en place du capteur UHF dans ladite ouverture centrale, la portion d'appui vienne en appui sur la pièce de maintien,
l'ensemble de capteur comportant en outre un premier joint pour s'interposer entre le portion d'appui et la pièce de maintien et un deuxième joint pour s'interposer entre la pièce de maintien et le hublot.

De tels ensembles permettent de fournir un logement étanche du corps de capteur lors de leur installation sur un poste électrique à haute tension.

L'invention concerne également un poste électrique à haute tension comprenant un hublot, ledit hublot étant fixé au reste du poste électrique au moyen d'un support, tel qu'une bride, du poste électrique,
le poste électrique comportant en outre un capteur UHF fixé sur ledit hublot au moyen d'un système de maintien selon l'invention.

Un tel poste électrique bénéficie des avantages liés au système de maintien selon l'invention.

L'invention concerne en outre un procédé de fixation d'un capteur UHF sur un hublot d'un poste électrique à haute tension, ledit hublot étant fixé au reste du poste électrique au moyen d'un support, le procédé comportant les étapes suivantes :
- fourniture d'un élément de fixation et d'au moins un premier organe de verrouillage,
- fixation de l'élément de fixation sur le poste électrique en regard du support avec son ouverture donnant accès au hublot lorsqu'il est fixé sur le poste électrique,
- fourniture une pièce de maintien,
- logement partiel du capteur UHF dans la pièce de maintien,
- placement de la pièce de maintien dans l'ouverture de l'élément de fixation de manière à placer et à maintenir le capteur UHF en position vis-à-vis du hublot,
- verrouillage manuel en position la pièce de maintien (120) dans l'ouverture (119) de l'élément de fixation (110) au moyen du premier organe de verrouillage (130).

Un tel procédé permet l'installation d'un capteur UHF de manière à ce qu'il bénéficie des avantages liés à l'invention.

### BRÈVE DESCRIPTION DES DESSINS

La présente invention sera mieux comprise à la lecture de la description d'un exemple de réalisation, donné à titre purement indicatif et nullement limitatif, en faisant référence au dessin annexé sur lequel :
- la figure 1 illustre une vue en perspective d'un système de maintien selon l'invention muni d'un capteur UHF et équipant le hublot et son support d'un poste électrique,
- la figure 2 illustre une vue de dessus du hublot et de son support du poste électrique illustré sur la figure 1 après retrait du système de maintien selon l'invention,
- la figure 3 illustre une vue en perspective d'un capteur UHF susceptible d'être maintenu au moyen d'un système de maintien selon l'invention,
- les figures 4A et 4B illustrent deux vues en perspective d'une pièce de maintien du système de maintien illustré sur la figure 1,
- les figures 5A et 5B, illustrent des vues en perspective respectives d'une première et d'une deuxième mâchoire de retenue du système de maintien illustré sur la figure 1,
- la figure 6 illustre une vue en perspective d'un organe de verrouillage du système de maintien illustré sur la figure 1,
- la figure 7 illustre une vue en perspective d'un système de maintien selon un deuxième mode de réalisation de l'invention installé sur un hublot dont seules la bride et la fenêtre sont représentées, un tel système de maintien comportant deux organes de maintien montés respectivement la première et la deuxième mâchoire de retenue du système de maintien,
- la figure 8 illustre une vue en perspective du capteur UHF équipant le système de maintien illustré sur la figure 7,
- la figure 9 illustre une vue en perspective de la pièce de maintien telle qu'illustrée sur la figure 7 équipée du capteur UHF et disposée sur le hublot,
- la figure 10 illustre une vie en coupe de la pièce de maintien telle qu'illustrée sur les figures 7 et 9 équipée du capteur UHF et disposée sur le hublot,
- la figure 11 illustre une vue en perspective de l'installation de la première et de la deuxième mâchoire de retenue du système de maintien tel qu'illustré sur la figure 7 après que la pièce de maintien ait été disposée sur le hublot,
- les figures 12A à 12C illustrent trois exemples de réalisation d'un élément de fixation compatible aussi bien avec le premier et le deuxième mode de réalisation.

Des parties identiques, similaires ou équivalentes des différentes figures portent les mêmes références numériques de façon à faciliter le passage d'une figure à l'autre.

### EXPOSÉ DÉTAILLÉ DE MODES DE RÉALISATION PARTICULIERS

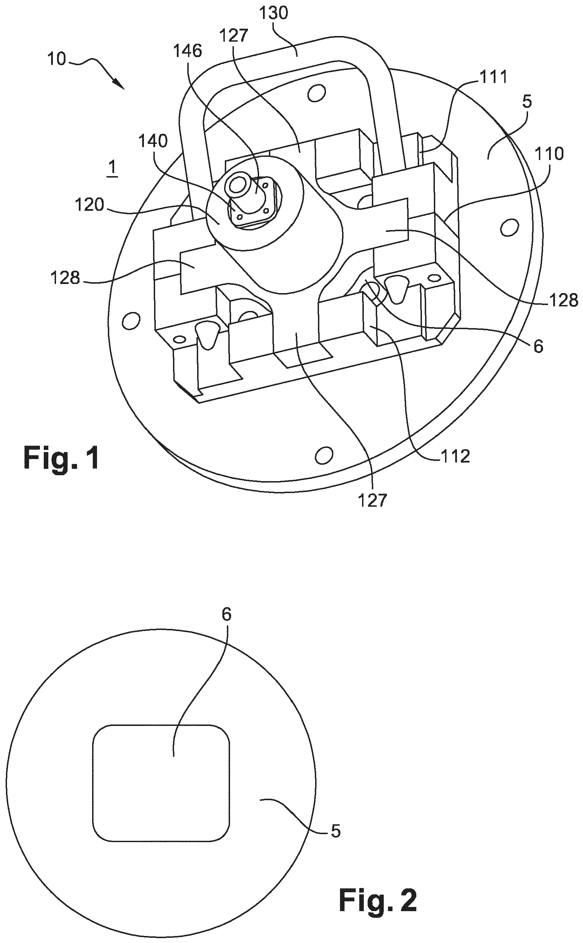

La figure 1 illustre un système de maintien 10 selon l'invention équipant un hublot 6 et son support 5 d'un poste électrique 1 à haute tension, ledit système de maintien 10 permettant de maintenir un capteur UHF 140 sur ledit hublot 6.

Un tel système de maintien 10 est particulièrement destiné à équiper les postes électriques à haute tension sous enveloppe métallique tels que les postes électriques isolés par un gaz diélectrique, plus connus sous leur dénomination anglaise Gas Insulated Substation (GIS).

Comme précédemment décrit et illustré sur la figure 2, un tel poste électrique 1 comporte au moins un hublot 6 de forme rectangulaire qui est fixé sur le reste du poste électrique 1 au moyen d'un support 5. Ce support est, sur les figures 1 et 2, une bride circulaire vissée sur une ouverture du poste électrique 1. Le hublot 6 est monté sur le support 6 en faisant saille de ce dernier.

Bien entendu, si le hublot 6 et le support 5, ou bride, qui le fixe au reste du poste électrique sont respectivement de forme rectangulaire et de forme cirulaire, l'invention est parfaitement compatible avec des hublots et/ou des supports pour hublot d'une autre forme. Ainsi, comme cela est montré plus loin avec la description d'un deuxième mode de réalisation de l'invention, le système de maintien peut être adapté pour équiper un hublot de forme circulaire.

Le système de maintien 1 comporte, comme illustré sur la figure 1 :
- une première et deuxième mâchoire de retenue 111, 112 fixées sur le hublot 6, la première et la deuxième mâchoire de retenue définissant ensemble une ouverture 119 donnant accès au hublot 6,
- une pièce de maintien 120 logeant partiellement le capteur UHF, ladite pièce de maintien 120 étant placée dans l'ouverture 119 définie par la première et la deuxième mâchoire 111, 112,
- un premier organe de verrouillage 130 adapté pour verrouiller en position la pièce de maintien 120 dans l'ouverture 119.

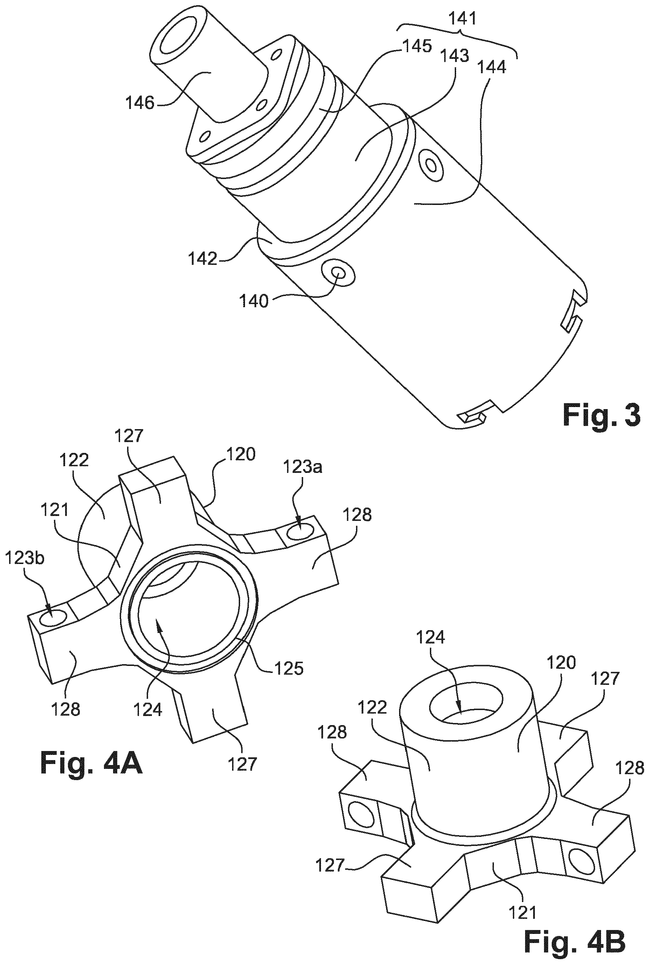

La figure 3 illustre le capteur UHF 140 maintenu par le système de maintien 10 sur le hublot 6. Le capteur UHF 140 comporte un corps de capteur 141 de forme générale cylindrique de révolution dont une extrémité, la base, est destinée à venir en appui sur la surface du hublot 6, l'autre extrémité comprenant un connecteur 146 pour permettre la connexion du capteur UHF 140 à une électronique de capteur UHF, non illustrée. Le diamètre du corps de capteur 141 varie le long de son l'axe de symétrie, le corps de capteur 141 présentant une première portion 143, celle comportant le connecteur, dont le diamètre est inférieur à celui d'une deuxième portion 144, celle comportant la base destinée à venir en appui sur la surface du hublot 6. De cette manière, le corps de capteur 141 comporte à l'interface entre la première et la deuxième portion 143, 144 un épaulement 142.

Le corps de capteur 141 comporte également sur sa première portion 143 un premier joint 145. Ce premier joint 145 est agencé pour s'interposer entre le reste du corps de capteurs 141 et l'intérieur de la pièce de maintien 120.

Le corps de capteur 141 du capteur UHF 140 est logé dans la pièce de maintien 120.

La pièce de maintien 20, comme illustré sur les figures 4A et 4B, comporte :
- une embase 121 en forme de croix, chacune des branches 127, 128 de la croix étant conformée pour venir se positionner dans une rainure 117, 118 des première et deuxième mâchoires de retenue 111, 112,
- un manchon 122 s'étendant à partir de l'embase 121 et délimitant un logement 124 pour le capteur UHF 140 qui débouche dans l'embase 121.

L'embase 121 est conformée pour venir se placer dans l'ouverture 119 définie par les première et deuxième mâchoires 111, 112, les branches de la croix étant logées dans des rainures 117, 118 ménagées dans les première et deuxième mâchoires 111, 112. Avec une telle conformation, lorsque la pièce de maintien 120 est placée, de par son embase, dans l'ouverture 119, le logement 124 défini par le manchon 122 débouche dans l'embase 12 en regard de la surface du hublot 6.

Parmi les branches 127, 128 de l'embase 121 deux premières branches 127, opposées l'une à l'autre, sont des branches de positionnement et deux deuxièmes branches 128, également opposées l'une à l'autre, sont des branches de verrouillage.

Les deuxièmes branches 128 de verrouillage sont toutes deux pourvues d'un orifice de passage 123a, 123b pour l'organe de verrouillage. Les orifices de passage 123a, 123b sont des orifices traversant qui s'étendent parallèlement au plan de l'embase et perpendiculairement à la direction selon laquelle s'étendent les deuxièmes branches 128.

L'embase 121 comporte un deuxième joint 125 disposé sur sa face venant en appui sur la surface du hublot 6 et qui est opposée au manchon 122. Ce deuxième joint 125 est, comme illustré sur la figure 4A, disposé dans une rainure circulaire entourant l'embouchure du logement 124 dans l'embase 121. De cette manière, lorsque la pièce de maintien 120 est placée dans l'ouverture 119, le logement 124 présente son embouchure dans l'embase fermée hermétiquement par la surface du hublot 6 et le deuxième joint 125. L'embouchure étant une deuxième ouverture du logement 124, le deuxième joint 125 permet de fermer hermétiquement une deuxième ouverture du logement 124.

Le manchon 122 présente une forme cylindrique de révolution et est dimensionné pour loger la première portion 144 et une partie de la deuxième portion 145 du corps de capteur 141. Ainsi, en partant de l'embase 121, le manchon comporte une première partie dont le diamètre intérieur correspond à celui de la première portion 144 du corps de capteur, et une deuxième partie dont le diamètre correspond à celui de la deuxième portion 145 du corps de capteur 141. De cette manière, l'interface entre la première partie forme un épaulement formant contre-butée pour l'épaulement 142 du corps de capteur 141. Le dimensionnement de la première partie du manchon 122 est adapté pour mettre en appui le capteur UHF 140 sur la surface du hublot 6 lorsque le capteur UHF 140 est logé dans le logement 124 et que la pièce de maintien 120 est placée dans l'ouverture 119.

Lorsque le corps de capteur UHF 140 est disposé dans le logement 124, le premier joint 145 du capteur UHF 140 permet de fermer hermétiquement une première ouverture du logement 124, celle se trouvant à l'opposé de l'embase 121 tout en permettant au connecteur de sortir du logement 124. Ainsi, lorsque le capteur UHF est installé au moyen du système du maintien 1, le corps de capteur 141 est protégé de l'humidité puisque le logement 124 est fermé hermétiquement d'un côté par le deuxième joint 125 et la surface du hublot 6, de l'autre par le premier joint 145 et la première portion 143 du capteur UHF 140. Un tel logement du capteur 140 est particulièrement avantageux pour un poste électrique 1 se trouvant à l'extérieur soumis aux intempéries.

Les mâchoires de retenue 111, 112, comme illustré sur la figure 1, sont conformées pour se fixer sur le hublot 6. Cette fixation des mâchoires de retenue 111, 112 sur le hublot 6 est fournie par placement des mâchoires de retenue 111, 112 de part et d'autre du hublot 5 et un enserrement du hublot 6 par ces dernières au moyen de deux vis de serrage non illustrées.

Chacune des mâchoires de retenue 111, 112, comportent, comme illustré sur les figures 5A et 5B, une portion longitudinale 115 comportant une première et une deuxième extrémité à partir desquelles s'étendent respectivement une première et une deuxième extension latérale 116. La première et la deuxième extension latérale 116 de chacune des mâchoires de retenue 111, 112, s'étendent toutes deux parallèlement l'une à l'autre.

Chacune des mâchoires de retenue 111, 112 comporte sur sa portion longitudinale 115 une rainure de positionnement 117 pour accueillir l'une des premières branches 127 de la pièce de maintien 120. Les première et les deuxième extensions latérales 116 comportent chacune une saillie en forme de L, l'intérieur du L étant conformé pour former avec l'intérieur du L correspondant de l'autre mâchoire de retenue 111, une rainure de verrouillage 118. La branche supérieure du L qui s'étend parallèlement à la portion longitudinale 115, comporte un orifice de passage 113a, 113b, 113c, 113d pour l'organe de verrouillage. Les orifices de passage 113a, 113b, 113c, 113d s'étendent parallèlement à la direction des extensions latérales 116 de la mâchoire de retenue 111, 112 correspondante. De même, la base du L est munie d'un orifice de serrage 114a, 114b, 114c, 114d pour permettre l'installation des vis de serrage. Les orifices de serrage 114a, 114b, 114c, 114d s'étendent sur toute la longueur de la base du L parallèlement à la direction des extensions latérales 116.

Ainsi, lorsque la première et la deuxième mâchoire de retenue 111, 112 sont placées autour du hublot 6, les extensions latérales 116 de la première mâchoire de retenue 111 sont placées en contact des extensions latérales 116 de la deuxième mâchoire 112 dans leur prolongement. De cette manière les orifices de serrage 114a, 114b de la première mâchoire 111 sont en communication avec ceux de la deuxième mâchoire de retenue 112 et le placement des vis de serrage dans ces derniers permet un enserrement du hublot 6 par les mâchoires de retenue 111, 112. Cet enserrement du hublot 6 par les mâchoires de retenue 111, 112 offre une fixation pérenne des mâchoires de retenue 111, 112 sur le hublot 6 et donc sur le poste électrique 1. Les extensions latérales 116 de la première et de la deuxième mâchoire de retenue 111, 112 délimitent ensemble une ouverture 119 donnant accès au hublot 6.

Ainsi la première et la deuxième mâchoire 111, 112, forment ensemble un élément de fixation 110 destiné à être fixé sur le poste électrique 1 en regard du support 5, ledit élément de fixation 110 comportant une ouverture 119 donnant accès au hublot 6 lorsqu'il est fixé sur le poste électrique 1.

Avec une telle fixation des première et deuxième mâchoires de retenue 111, 112 sur le poste électrique 1, le positionnement des saillies en forme de L permet la formation des rainures de verrouillage 118 et un alignement des orifices de passages 113a, 113b de la première mâchoire de retenue 111 avec ceux de la deuxième mâchoire de retenue 112. De cette manière, lorsque la pièce de maintien 120 est placée dans l'orifice 119 avec ses deuxièmes branches 128 disposées dans les rainures de verrouillage 118, les orifices de passages 113a, 113b, 113c, 113d, 123a, 123b des première et deuxième mâchoires 111, 112 et de la pièce de maintien 120 sont alignées et se prolongent.

L'organe de verrouillage 130, illustré sur la figure 6, présente une forme générale en U, avec la base 131 du U formant une poignée et les deux branches du U 133a, 133b qui forment des tiges de verrouillage adaptées pour venir dans les orifices de passage 113a, 113b, 113c, 113d, 123a, 123b des mâchoires de retenue 111, 112 et de la pièce de maintien 120 de manière à verrouiller le position de la pièce de maintien sur les mâchoires de retenue 111, 112.

Ainsi, un capteur UHF peut être installé sur un poste électrique avec un tel système de maintien 10 au moyen d'un procédé de fixation comportant les étapes suivantes :
- fourniture un élément de fixation 110,
- fixation de l'élément de fixation 110 sur le poste électrique 1 en regard du support 5 avec son ouverture 119 donnant accès au hublot 6 lorsqu'il est fixé sur le poste électrique 1,
- fourniture une pièce de maintien 120,
- logement partiel du capteur UHF 140 dans la pièce de maintien 120,
- placement de la pièce de maintien 120 dans l'ouverture 119 de l'élément de fixation 110 de manière à placer et à maintenir le capteur UHF 140 en position vis-à-vis du hublot 6,
- verrouillage manuel en position la pièce de maintien 120 sur l'élément de fixation 110 au moyen de l'organe de verrouillage 130.

L'étape de fixation de l'élément de fixation 110 sur le poste électrique 1 comporte les sous étapes suivantes :
- disposition de la première et de la deuxième mâchoire de retenue 111, 112 autour du hublot 6,
- fourniture des vis de serrage,
- installation et vissage des vis de serrage dans les orifices de serrage de manière à ce que les mâchoires de retenue 111, 112 enserrent le hublot 6.

L'étape de verrouillage manuel en position de la pièce de maintien 120 sur l'élément de fixation 110 au moyen de l'organe de verrouillage 130 consiste en une insertion de chacune des tiges de verrouillage dans les orifices de passages 113a, 113b, 113c, 113d, 123a, 123b des mâchoires de retenue 111, 112 et de la pièce de maintien 120.

Bien entendu, si le hublot 6 et son support 5 sont respectivement un hublot 6 de forme rectangulaire faisant saillie de son support et le support est une bride circulaire, l'invention ne se limite pas aux systèmes de fixation configurés pour équiper de tels ensemble hublot/support mais concerne tous les systèmes maintien quel que soit la forme et la configuration du hublot et de son support.

De la même façon, si l'élément de fixation du mode de réalisation exemplifié est conformé pour se fixer sur le hublot, d'autres configurations de l'élément de fixation sont également envisageable sans que l'on sorte du cadre de l'invention. Ainsi, l'élément de fixation peut également être configuré pour se fixer sur le support ou une autre pièce du poste électrique sans que l'on sorte du cadre de l'invention, étant entendu que l'élément de fixation se présente, lorsqu'il est fixé au poste électrique, en regard du support, et que son ouverture, dans cette même configuration, donne accès au hublot.

Bien entendu, si dans ce mode de réalisation l'organe de verrouillage est un organe de verrouillage présentant une forme de U comprenant deux tiges de verrouillage, tout autre organe de verrouillage permettant un verrouillage manuel, et donc un déverrouillage, est envisageable sans que l'on sorte du cadre de l'invention. Ainsi, il est tout à fait envisageable que la pièce de maintien soit verrouillée en position dans l'orifice au moyen de deux organe de verrouillage, l'un étant une vis et l'autre un écrou papillon.

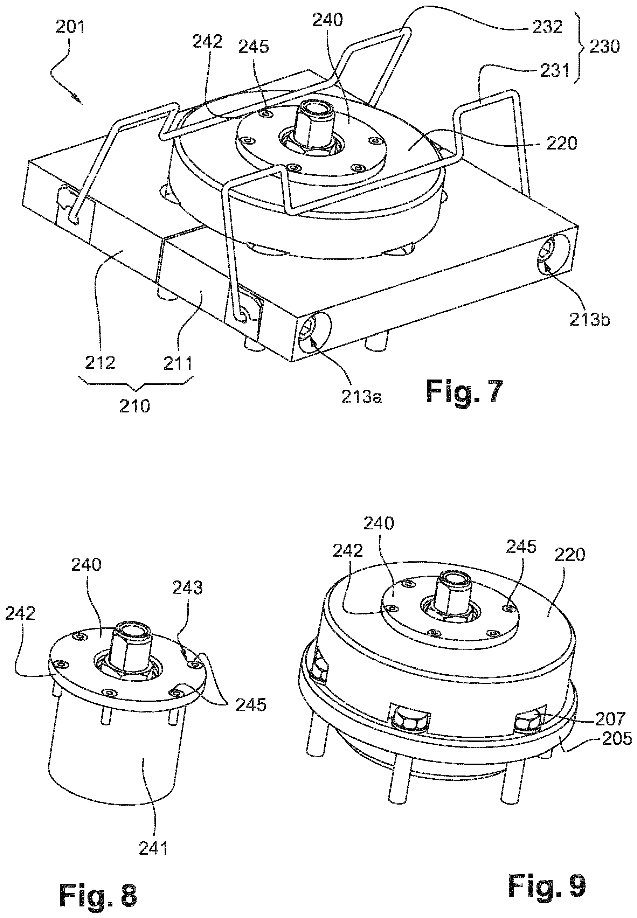

Les figures 7 à 11 illustrent un système de maintien 210 selon un deuxième mode de réalisation de l'invention dans lequel chacune des mâchoires de retenue 211, 212 est équipée d'un organe de verrouillage 230 qui lui est propre et dans lequel le maintien du capteur UHF 240 sur la pièce de maintien 220 est obtenu au moyen d'une pluralité de vis 245.

Un système de maintien 210 selon ce deuxième mode de réalisation se différencie du système de maintien 110 selon le premier mode de réalisation de par l'utilisation de deux organes de verrouillage chacun monté mobile sur l'une des mâchoires de retenue 211, 212 qui lui est respective et de par l'installation du capteur UHF dans le logement offert par la pièce de maintien 220.

La figure 8 illustre un capteur UHF 240 dont la pièce de maintien 220 est adaptée pour le loger selon ce deuxième mode de réalisation. Le capteur UHF 240 comporte un corps de capteur 241 de forme générale cylindrique. Le capteur UHF 240 comporte en outre une couronne 242 qui s'étend circonférentiellement à partir d'une base du corps de capteur 241 qui est destinée à être opposée au hublot 206. La couronne 242 comporte des orifices traversants 243 sensiblement axiaux vis-à-vis de l'axe du corps de capteur 241 et répartie dans la couronne régulièrement de manière circonférentielle.

Sur la figure 8, le capteur UHF 240 est équipé de vis 245 pour son maintien logé dans un logement formé par une ouverture centrale 223 ménagée dans la pièce de maintien 220.

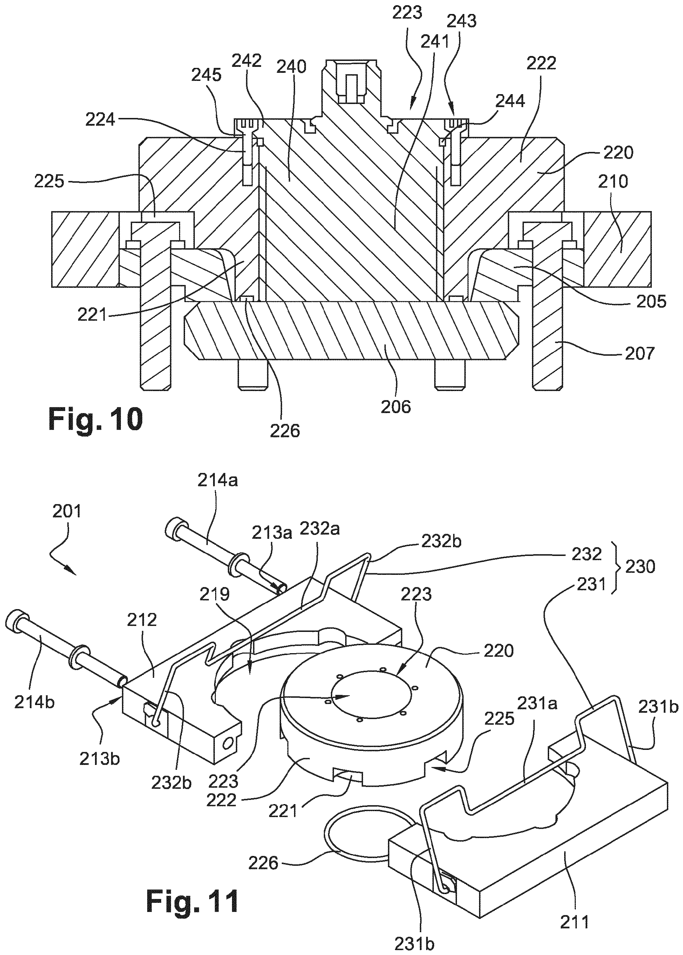

La figure 9 illustre l'installation du capteur UHF 240 partiellement logé dans le logement de la pièce de maintien 220, cet ensemble capteur UHF 240 et pièce de maintien 220 étant disposé sur le hublot 206. La figure 10 illustre ce même ensemble en vue en coupe.

La pièce de maintien 220, comme le montre la figure 10, présente une forme générale cylindrique avec un corps de pièce 222, et une portion saillante 221 destinée à venir en contact avec le hublot 206 qui présente un diamètre inférieure au corps de pièce 222.

La pièce de maintien 220 est percée sur toute sa hauteur d'une ouverture centrale 223 faisant office de logement pour le capteur UHF 240. L'ouverture centrale 223 est dimensionnée pour loger le corps de capteur 241. Ainsi, l'ouverture centrale 222 de la pièce de maintien 220 présente un diamètre légèrement supérieur à celui du corps de capteur 241. Le corps de pièce 222 comporte une base dite inférieure, venant en appui sur le support 2015 et à partir de laquelle s'étant la portion saillante 221, et une base, dite supérieure, opposée à la face inférieure.

La face supérieure du corps de pièce 221 est munie, de manière complémentaire aux orifices traversants 243 de la couronne 242 du capteur UHF 240, d'une série d'orifices taraudés 224. Les orifices taraudés 224 sont répartis circonférentiellement autour de l'ouverture centrale 223. La répartition des orifices taraudés 224 correspond à celle des orifices traversants 243 de la couronne 242, de manière à ce qu'à ce que chaque orifice taraudé 223 prolonge un orifice traversant 243 lors de la mise en place du corps de capteur 241 dans le logement de la pièce de maintien 220.

Ainsi, lorsque le capteur UHF 240 est installé dans la pièce de maintien 220, son corps de capteur 241 logé dans l'ouverture centrale 223 formant logement, il est possible de faire correspondre les orifices traversant 243 et les orifices taraudés 224 afin d'autorisé le vissage des vis 245 dans les orifices taraudés. Une fois les vis 245 visées, la couronne 242 se retrouve contrainte par les vis 245 en appui sur la face supérieure de la pièce de maintien 220.

Afin d'assurer la fermeture hermétique à l'eau de l'ouverture centrale 223 au niveau de la face supérieure de la pièce de maintien 220, la couronne 241 et/ou la face supérieure peuvent comporter un premier joint circonférentiel 244 configuré pour être emprisonné entre la couronne 241 et la face supérieure de la pièce de maintien 240 lors du placement du corps de capteur 241 dans le l'ouverture centrale 223. La couronne 241 forme une portion d'appui du capteur UHF.

Comme le montre la figure 9, le corps de pièce 222 comporte au niveau de sa face inférieure des évidements 225 pour loger au moins partiellement les têtes des écrous 207 permettant la fixation du hublot sur son support 205. De cette manière, il n'y a pas de risque d'endommagement des écrous 207 lors du placement de la pièce de maintien 220 en appui sur le hublot 206.

La hauteur cumulée du corps de pièce 222 et de la portion saillante 221 est sensiblement égale à celle du corps de capteur 241, de cette manière le capteur UHF 220 peut être contraint sur la surface du hublot 206 lors de l'installation de l'ensemble capteur UHF 220/pièce de maintien 240 sur le hublot 206 comme cela est illustré sur les figures 9 et 10

La pièce de maintien 220 peut également comporter, comme cela est notamment illustré sur la figure 10, sur la face de la portion de saillie 221 qui vient en appui sur le hublot 206, une rainure pour accommoder au moins partiellement un joint torique 226. De cette manière, lorsque l'ensemble capteur UHF 220/pièce de maintien 240 sur le hublot 206, le corps de capteur 241 est enfermé hermétiquement dans le logement formé par l'ouverture centrale 223.

La première et la deuxième mâchoire de retenue 211, 212 sont configurées, comme pour celles du premier mode de réalisation, pour être installées sur le support 205 du hublot 206. Chaque mâchoire 211, 212 présente une forme générale rectangulaire dans laquelle un demi-cercle a été retiré au niveau de l'une de ses longueurs. De cette manière, lorsque la première et la deuxième mâchoire 211, 212 sont assemblées pour former un élément de fixation 230, elles délimitent ensemble est avec leurs zones demi-circulaires retirées une ouverture 219 sensiblement circulaire donnant accès au hublot 206.

La première et la deuxième mâchoire 211, 212 comportent toutes deux des passages de vis pour permettre leur assemblage au moyen de deux vis 214a, 214b sur le support 205 du hublot 206 pour former l'élément de fixation 210.

La première et la deuxième mâchoire de retenue 211, 212 sont toutes deux équipées d'un organe de verrouillage 231, 232. Chaque organe de verrouillage 231, 232 est monté sur la mâchoire mobile en rotation entre une première position dans laquelle il laisse libre l'ouverture 219 pour autoriser le placement de la pièce de maintien 220 dans ladite ouverture 219 et une deuxième position de verrouillage dans laquelle le premier organe de verrouillage verrouille en position la pièce de maintien 220 dans l'ouverture 219.Chacun des organes de verrouillage 231, 232 est réalisé au moyen d'une tige métallique, préférentiellement dans un acier à ressort. Chaque organe de verrouillage 231, 232 comporte une tige centrale 231a, 232a qui s'étend longitudinalement et à partir de laquelle s'étendent transversalement deux branches latérales 231b, 232b.

Chacune des branches latérales 231b, 232b des organes de verrouillage 231, 232 comporte, à son extrémité opposée à la tige centrale 231a, 232a, un décrochement latérale logé dans la mâchoire de retenue 211, 212 correspondante. Le logement du décrochement de latérale est adapté pour autoriser un pivotement de l'organe de verrouillage selon un axe parallèle à la direction longitudinale de la tige centrale 231a, 232a, correspondante.

Chaque tige centrale 231a s'étend selon une ligne longitudinale avec une zone intérieure qui présente un retrait vis-à-vis de cette ligne longitudinale en direction des branches latérales 231b, 232b. La zone intérieure de chacune des premier et deuxième organes de verrouillage 231, 232 est destinée à venir en appui sur la pièce de maintien 220 lorsque ledit organe de verrouillage 231, 232 est dans sa position de verrouillage.

Ainsi, un technicien devant installé un système de maintien 210 selon le deuxième mode de réalisation sur un poste électrique à haute tension pourra mettre en œuvre un procédé d'installation comportant les étapes suivantes :
- fourniture des première et deuxième mâchoires de retenue 211, 212 comprenant respectivement le premier et le deuxième organe de verrouillage,
- installation de la première et la deuxième mâchoire de retenue autour du support 205 du hublot 206, ces dernière étant assemblées ensemble au moyen de vis 214a, 214b pour former un élément de fixation 210,
- fourniture du capteur UHF 240,
- fourniture de la pièce de maintien 220,
- équipement de la pièce de maintien 220 avec le capteur UHF 240, le corps de capteur 241 étant logé dans le logement formé par l'ouverture centrale 223 de la pièce de maintien 220,
- placement de la pièce de maintien 220 dans l'ouverture 219 de l'élément de fixation 210 de manière à placer et à maintenir le capteur UHF 205 en position vis-à-vis du hublot 206,
- verrouillage manuel en position la pièce de maintien 220 dans l'ouverture 219 de l'élément de fixation 210 en déplaçant le premier et le deuxième organe de verrouillage dans leur position de verrouillage.

Bien entendu, si l'élément de fixation peut comporter deux mâchoires de retenue 211, 212 telles qu'illustrées sur la figure 11, l'invention ne se limite pas à ce seul type d'élément de fixation.

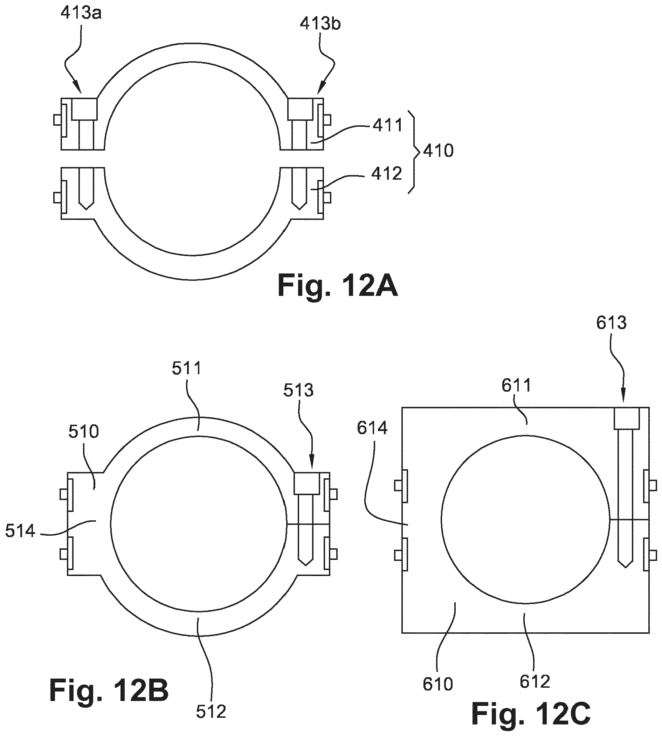

Les figures 12A à 12C illustrent d'autres exemples de réalisation d'élément de fixation compatible avec les systèmes de maintien 10, 210 selon le premier et le deuxième mode réalisation.

Ainsi, par exemple, comme illustré sur la figure 12A, la première et la deuxième mâchoire 311, 312 pourrait avoir une forme demi-circulaire, chacune des mâchoires de retenue 311, 312 comportant deux passages de vis 323a, 323b pour permettre leur assemblage au moyen de vis. De même, comme illustré sur les figure 12B et 12C, l'ensemble de fixation 510, 610 peut comporter une première et une deuxième mâchoire 511, 512, 611, 612, reliées l'une à l'autre au moyen d'un lien déformable 514, 614. Par lien déformable, il doit être entendu que la première et la deuxième mâchoire de retenue 511, 512, 611, 612 sont reliées l'une à l'autre de manière à autoriser un déplacement de l'une par à rapport l'autre. Un tel déplacement ici est fourni par une déformation aussi bien au niveau du lien en lui-même que de chacune des première et deuxième mâchoires de retenue 511, 512, 611, 612. Avec un tel lien déformable, l'assemblage entre la première et la deuxième mâchoire ne nécessite qu'un seul passage de vis 513, 613 ménagé dans chacune de la première et la deuxième mâchoire de retenue et d'une seule vis.

Bien entendu, ces exemples ne sont fournis qu'à titre illustratif et ne sont nullement limitatif.

## Revendications

1. Système de maintien (10, 201) d'un capteur ultra haute fréquence (UHF) (140,240) sur un hublot (6, 206) de poste électrique (1) haute tension, ledit hublot (6, 206) étant fixé au reste du poste électrique (1) au moyen d'un support (5, 205), tel qu'une bride, du poste électrique (1),
le système de maintien (10, 201) comportant :
- au moins un élément de fixation (110, 210), destiné à être fixé sur le poste électrique (1) en regard du support (5, 205), ledit élément de fixation comportant une ouverture (119, 219) donnant accès au hublot (6, 206) lorsqu'il est fixé sur le poste électrique (1),
le système de maintien (10, 201) **étant caractérisé en ce qu'**il comporte en outre :
- une pièce de maintien (120, 220) de capteur UHF (140, 240) configurée pour loger au moins partiellement le capteur UHF (140, 240), la pièce de maintien (120, 220) étant en outre configurée pour être placée dans l'ouverture (119, 219) de l'élément de fixation (110, 210) et pour maintenir le capteur UHF (140, 240) en position vis-à-vis du hublot (6, 206), et
- au moins un premier organe de verrouillage (130, 231, 232) adapté pour verrouiller en position la pièce de maintien (120, 220) sur l'élément de fixation (110, 210) lorsque la pièce de maintien (120, 220) est placée dans l'ouverture (119, 219) de l'élément de fixation (110, 210), ledit premier organe de verrouillage (130, 230) étant configuré pour permettre un verrouillage manuel en position de la pièce de maintien (120, 220) dans l'ouverture (119, 219) de l'élément de fixation (110, 210).

2. Système de maintien (10, 201) selon la revendication 1, dans lequel le système de maintien (10, 201) est destiné à maintenir un capteur UHF (140, 240) sur un hublot (6, 206) faisant saillie du support (5), l'élément de fixation (110,210) étant configuré pour se fixer sur le pourtour du hublot (6, 206).

3. Système de maintien (10, 201) selon la revendication 2, dans lequel l'élément de fixation (110, 210) comporte une première et une deuxième mâchoire de retenue (111, 112, 211, 212, 311, 312, 411, 412, 511, 512, 611, 612) configurées pour se fixer sur le hublot (6, 206) en l'enserrant.

4. Système de maintien (10) selon l'une quelconque des revendications 1 à 3, dans lequel l'élément de fixation (110) et la pièce de maintien (120) comprennent chacun au moins un orifice de passage (113a, 113b, 113c, 113d, 123a, 123b) pour le passage du premier organe de verrouillage (130), le verrouillage en position de la pièce de maintien (120) sur l'élément de fixation (110) se faisant par insertion d'une partie du premier organe de verrouillage (140), dite tige de verrouillage (133a, 133b)dans lesdits orifices de passage (113a, 113b, 113c, 113d, 123a, 123b).

5. Système de maintien (201) selon l'une quelconque des revendications 1 à 3, dans lequel le premier organe de verrouillage (231) est monté mobile sur l'élément de fixation (230) entre au moins une première position dans laquelle il laisse libre l'ouverture (219) pour autoriser le placement de l'élément de fixation dans ladite ouverture (219) et une deuxième position de verrouillage dans laquelle le premier organe de verrouillage verrouille en position la pièce de maintien (220) dans l'ouverture (219) de l'élément de fixation (210).

6. Système de maintien selon les revendication 3 et 5 prises en combinaison, comprenant au moins un deuxième organe de verrouillage (232), le premier et le deuxième organe de verrouillage (231, 232) étant montés mobiles entre la première et la deuxième position sur respectivement la première et la deuxième mâchoire de retenue (211, 212).

7. Système de maintien (10, 201) selon l'une quelconque des revendications 1 à 6, dans laquelle la pièce de maintien (120, 220) est configurée pour loger au moins une partie du capteur UHF (140, 240) enfermée hermétiquement lorsque le capteur UHF (140, 240) est fixé par le système de maintien (10, 201) sur le hublot (6, 206).

8. Système de maintien (10, 201) selon l'une quelconque des revendications 1 à 7 dans lequel l'élément de fixation comporte des moyens de positionnement pour positionner la pièce de maintien (120) lors de son placement dans l'ouverture (119).

9. Système de maintien (201) selon l'une quelconque des revendications 1 à 8 dans lequel la pièce de maintien (220) est configurée pour permettre une fixation du capteur UHF (240) lorsqu'il est au moins partiellement logé dans la pièce de maintien (220).

10. Ensemble de capteur UHF comportant :
- un capteur UHF (140, 240),
- un système de maintien (10, 201) du capteur UHF (140, 240) sur un hublot (6, 206) d'un poste électrique (1) haute tension, ledit hublot (6, 206) étant fixé au reste du poste électrique (1) au moyen d'un support (5, 205), tel qu'une bride, du poste électrique (1),
l'ensemble **étant caractérisé en ce que** le système de maintien (10, 210) est un système selon l'une quelconque des revendications 1 à 6.

11. Ensemble de capteur UHF selon la revendication 10, dans laquelle la pièce de maintien (120, 220) délimite un logement (124, 223) pour le capteur UHF (140, 240) et dans lequel la pièce de maintien (120, 220) et le capteur UHF (140, 240) sont conformés pour fermer hermétiquement le logement (124, 223) lorsque l'ensemble de capteur UHF est installé sur le poste électrique (1).

12. Ensemble de capteur UHF selon la revendication 11, dans lequel le capteur UHF (140) comporte un corps de capteur (141),
dans lequel la pièce de maintien (120) comporte :
- une embase (121) par laquelle la pièce de maintien est placée dans l'ouverture (119), et
- un manchon (122) s'étendant à partir de l'embase et délimitant un logement (124) pour le corps de capteur (141) présentant une première et deuxième ouverture,
et dans lequel, le corps de capteur (141) comporte un premier joint (145) pour s'interposer entre le reste du corps de capteur et la paroi du logement (124) de manière à fermer hermétiquement la première ouverture du logement(124),
l'embase (121) comportant un deuxième joint (125) agencé pour venir en appui sur la surface du hublot (6) de manière à fermer hermétiquement la deuxième ouverture du logement (124).

13. Ensemble de capteur UHF selon la revendication 11, dans lequel le capteur comporte un corps de capteur (241) et une portion d'appui qui s'étend à partir du corps de capteur (241),
dans lequel, la pièce de maintien (220) comporte une ouverture centrale (223) pour loger le corps de capteur (241) de manière à ce que lors de la mise en place du capteur UHF (240) dans ladite ouverture centrale (223), la portion d'appui vienne en appui sur la pièce de maintien (220),
l'ensemble de capteur comportant en outre un premier joint (244) pour s'interposer entre le portion d'appui et la pièce de maintien et un deuxième joint (226) pour s'interposer entre la pièce de maintien (220) et le hublot (206).

14. Poste électrique (1) à haute tension comprenant un hublot (6, 206), ledit hublot (6, 206) étant fixé au reste du poste électrique (1) au moyen d'un support (5, 205), tel qu'une bride, du poste électrique (1),
Le poste électrique (1) **étant caractérisé en ce qu'**il comporte en outre un capteur UHF (140, 240) fixé sur ledit hublot (6, 206) au moyen d'un système de maintien (10, 201) selon l'une quelconque des revendications 1 à 9.

15. Procédé de fixation d'un capteur UHF (140, 240) sur un hublot (6, 206) d'un poste électrique (1) à haute tension, ledit hublot (6, 206) étant fixé au reste du poste électrique (1) au moyen d'un support (5, 205), le procédé **étant caractérisé en ce qu**'il comporte les étapes suivantes :
- fourniture d'un élément de fixation (110, 210) et d'au moins un premier organe de verrouillage (130, 231, 232),
- fixation de l'élément de fixation (110, 210) sur le poste électrique (1) en regard du support (5) avec son ouverture (119, 219) donnant accès au hublot (6, 206) lorsqu'il est fixé sur le poste électrique (1),
- fourniture une pièce de maintien (120, 220),
- logement partiel du capteur UHF (140, 240) dans la pièce de maintien (120,220),
- placement de la pièce de maintien (120, 220) dans l'ouverture (119, 219) de l'élément de fixation (110, 210) de manière à placer et à maintenir le capteur UHF (140, 240) en position vis-à-vis du hublot (6, 206),
- verrouillage manuel en position de la pièce de maintien (120, 220) dans l'ouverture (119, 219) de l'élément de fixation (110, 210) au moyen du premier organe de verrouillage (130, 231, 232).

## Patentansprüche

1. Haltesystem (10, 201) eines Ultra-Hochfrequenz (UHF) Sensors (140, 240) an einem Sichtfenster (6, 206) eines elektrischen Hochspannungsstellwerks (1), wobei das Sichtfenster (6, 206) anhand einer Halterung (5, 205), wie einem Flansch, des elektrischen Stellwerks (1) am Rest des elektrischen Stellwerks (1) befestigt ist,
wobei das Haltesystem (10, 201) Folgendes beinhaltet:
- mindestens ein Befestigungselement (110, 210), das dazu bestimmt ist, an dem elektrischen Stellwerk (1) auf Höhe der Halterung (5, 205) befestigt zu werden, wobei das Befestigungselement eine Öffnung (119, 219) beinhaltet, die den Zugriff auf das Sichtfenster (6, 206) freigibt, wenn es an dem elektrischen Stellwerk (1) befestigt ist,
wobei das Haltesystem (10, 201) **dadurch gekennzeichnet ist, dass** es weiter Folgendes beinhaltet:
- ein Haltestück (120, 220) eines UHF-Sensors (140, 240), das konfiguriert ist, um den UHF-Sensor (140, 240) mindestens teilweise aufzunehmen, wobei das Haltestück (120, 220) weiter konfiguriert ist, um in der Öffnung (119, 219) des Befestigungselements (110, 210) platziert zu werden, und um den UHF-Sensor (140, 240) in Position gegenüber dem Sichtfenster (6, 206) zu halten, und
- mindestens ein erstes Verriegelungsorgan (130, 231, 232), das ausgeführt ist, um das Haltestück (120, 220) in Position auf dem Befestigungselement (110, 210) zu verriegeln, wenn das Haltestück (120, 220) in der Öffnung (119, 219) des Befestigungselements (110, 210) platziert ist, wobei das erste Verriegelungsorgan (130, 230) konfiguriert ist, um eine manuelle Verriegelung in Position des Haltestücks (120, 220) in der Öffnung (119, 219) des Befestigungselements (110, 210) zu erlauben.

2. Haltesystem (10, 201) nach Anspruch 1, wobei das Haltesystem (10, 201) dazu bestimmt ist, den UHF Sensor (140, 240) auf einem Sichtfenster (6, 206) zu halten, das aus der Halterung (5) hervorsteht, wobei das Befestigungselement (110, 210) konfiguriert ist, um am Umfang des Sichtfensters (6, 206) befestigt zu werden.

3. Haltesystem (10, 201) nach Anspruch 2, wobei das Befestigungselement (110, 210) eine erste und eine zweite Rückhaltebacke (111, 112, 211, 212, 311, 312, 411, 412, 511, 512, 611, 612) beinhaltet, die konfiguriert sind, um auf dem Sichtfenster (6, 206) befestigt zu werden, indem sie es umspannen.

4. Haltesystem (10) nach einem der Ansprüche 1 bis 3, wobei das Befestigungselement (110) und das Haltestück (120) jeweils mindestens eine Durchgangsbohrung (113a, 113b, 113c, 113d, 123a, 123b) für den Durchgang des ersten Verriegelungsorgans (130) umfassen, wobei die Verriegelung des Haltestücks (120) in Position auf dem Befestigungselement (110) durch Einführen eines Teils des ersten Verriegelungsorgans (140), Verriegelungsstift (133a, 133b) genannt, in die Durchgangsbohrung (113a, 113b, 113c, 113d, 123a, 123b) erfolgt.

5. Haltesystem (201) nach einem der Ansprüche 1 bis 3, wobei das erste Verriegelungsorgan (231) zwischen mindestens einer ersten Position, in der es die Öffnung (219) freilässt, um die Platzierung des Befestigungselements in der Öffnung (219) zu ermöglichen, und einer zweiten Verriegelungsposition beweglich auf dem Befestigungselement (230) montiert ist, in der das erste Verriegelungsorgan das Haltestück (220) in der Öffnung (219) des Befestigungselements (21) in Position verriegelt.

6. Haltesystem nach den Ansprüchen 3 und 5 in Kombination, umfassend mindestens ein zweites Verriegelungsorgan (232), wobei das erste und das zweite Verriegelungsorgan (231, 232) zwischen der ersten und der zweiten Position beweglich auf jeweils der ersten und der zweiten Rückhaltebacke (211, 212) montiert sind.

7. Haltesystem (10, 201) nach einem der Ansprüche 1 bis 6, wobei das Haltestück (120, 220) konfiguriert ist, um mindestens einen Teil des UHF-Sensors (140, 240) hermetisch eingeschlossen aufzunehmen, wenn der UHF Sensor (140, 240) durch das Haltesystem (10, 201) an dem Sichtfenster (6, 206) befestigt ist.

8. Haltesystem (10, 201) nach einem der Ansprüche 1 bis 7, wobei das Befestigungselement Positionierungsmittel zum Positionieren des Haltestücks (120) bei dessen Platzierung in der Öffnung (119) beinhaltet.

9. Haltesystem (201) nach einem der Ansprüche 1 bis 8, wobei das Haltestück (220) konfiguriert ist, um eine Befestigung des UHF-Sensors (240) zu erlauben, wenn er mindestens teilweise in dem Haltestück (220) aufgenommen ist.

10. UHF-Sensoranordnung, Folgendes beinhaltend:
- einen UHF-Sensor (140, 240),
- ein Haltesystem (10, 210) des UHF-Sensors (140, 240) auf einem Sichtfenster (6, 206) eines elektrischen Hochspannungsstellwerks (1), wobei das Sichtfenster (6, 206) anhand einer Halterung (5, 205), wie einem Flansch, des elektrischen Stellwerks (1) am Rest des elektrischen Stellwerks (1) befestigt ist,
wobei die Anordung **dadurch gekennzeichnet ist, dass** das Haltesystem (10, 201) ein System nach einem der Ansprüche 1 bis 6 ist.

11. UHF-Sensoranordnung nach Anspruch 10, wobei das Haltestück (120, 220) eine Aufnahme (124, 223) für den UHF-Sensor (140, 240) eingrenzt und wobei das Haltestück (120, 220) und der UHF-Sensor (140, 240) angepasst sind, um die Aufnahme (124, 223) hermetisch zu verschließen, wenn die UHF-Sensoranordnung an dem elektrischen Stellwerk (1) installiert ist.

12. UHF-Sensoranordnung nach Anspruch 11, wobei der UHF-Sensor (140) einen Sensorkörper (141) beinhaltet,
wobei das Haltestück (120) Folgendes beinhaltet:
- eine Basis (121), durch die das Haltestück in der Öffnung (119) platziert wird, und
- eine Muffe (222), die sich aus der Basis heraus erstreckt und eine Aufnahme (124) für den Sensorkörper (141) eingrenzt, die eine erste und zweite Öffnung aufweist,
und wobei der Sensorkörper (141) eine erste Dichtung (145) beinhaltet, um sich zwischen dem Rest des Sensorkörpers und der Wand der Aufnahme (124) derart einzufügen, um die erste Öffnung der Aufnahme (124) hermetisch zu verschließen,
wobei die Basis (121) eine zweite Dichtung (125) beinhaltet, die angeordnet ist, um sich derart an der Oberfläche des Sichtfensters (6) anzulegen, um die zweite Öffnung der Aufnahme (124) hermetisch zu verschließen.

13. UHF-Sensoranordnung nach Anspruch 11, wobei der Sensor einen Sensorkörper (241) und einen Anlegeabschnitt beinhaltet, der sich aus dem Sensorkörper (241) heraus erstreckt,
wobei das Haltestück (220) eine zentrale Öffnung (223) beinhaltet, um den Sensorkörper (241) derart aufzunehmen, dass sich beim Anbringen des UHF-Sensors (240) in der zentralen Öffnung (223) der Anlegeabschnitt an dem Haltestück (220) anlegt,
wobei die Sensoranordnung weiter eine erste Dichtung (145) beinhaltet, um sich zwischen dem Anlegeabschnitt und dem Haltestück einzufügen und eine zweite Dichtung (226), um sich zwischen dem Haltestück (220) und dem Sichtfenster (206) einzufügen.

14. Elektrisches Hochspannungsstellwerk (1), ein Sichtfenster (6, 206) umfassend, wobei das Sichtfenster (6, 206) anhand einer Halterung (5, 205), wie einem Flansch, des elektrischen Stellwerks (1) am Rest des elektrischen Stellwerks (1) befestigt ist,
wobei das elektrische Stellwerk (1) **dadurch gekennzeichnet ist, dass** es weiter einen UHF-Sensor (140, 240) beinhaltet, der anhand eines Haltesystems (10, 210) nach einem der Ansprüche 1 bis 9 an dem Sichtfenster (6, 206) befestigt ist.

15. Verfahren zum Befestigen eines UHF-Sensors (140, 240) an einem Sichtfenster (6, 206) eines elektrischen Hochspannungsstellwerks (1), wobei das Sichtfenster (6, 206) anhand einer Halterung (5, 205) an dem Rest des elektrischen Stellwerks (1) befestigt ist, wobei das Verfahren **dadurch gekennzeichnet ist, dass** es die folgenden Schritte beinhaltet:
- Bereitstellen eines Befestigungselements (110, 201) und mindestens eines ersten Verriegelungsorgans (130, 231, 232),
- Befestigen des Befestigungselements (110, 210) an dem elektrischen Stellwerk (1) auf Höhe der Halterung (5) mit Ihrer Öffnung (119, 219), die den Zugriff auf das Sichtfenster (6, 206) freigibt, wenn es an dem elektrischen Stellwerk (1) befestigt ist,
- Bereitstellen eines Haltestücks (120, 220),
- Teilweises Aufnehmen des UHF-Sensors (140, 240) in dem Haltestück (120, 220),
- Platzieren des Haltestücks (120, 220) in der Öffnung (119, 219) des Befestigungselements (110, 210), um den UHF-Sensor (140, 240) in Position gegenüber dem Sichtfenster (6, 206) zu platzieren und zu halten,
- Manuelles Verriegeln in Position des Haltestücks (120, 220) in der Öffnung (119, 219) des Befestigungselements (110, 210) anhand des ersten Verriegelungsorgans (130, 231, 232).

## Claims

1. Holding system (10, 201) an ultra-high-frequency (UHF) sensor (140,240) on a view port (6, 206) of a high-voltage electrical station (1), said view port (6, 206) being attached to the rest of the electrical station (1) by means of a support (5, 205), such as a flange, of the electrical station (1),
the holding system (10, 201) comprising:
- at least one attachment element (110, 210), designed to be attached to the electrical station (1) facing the support (5, 205), said attachment element comprising an opening (119, 219) giving access to the view port (6, 206) when it is attached to the electrical station (1),
the holding system (10, 201) **being characterised in that** it further comprises:
- a holding part (120, 220) a UHF sensor (140, 240) configured to house at least partially the UHF sensor (140, 240), the holding part (120, 220) being further configured to be placed in the opening (119, 219) of the attachment element (110, 210) and to hold the UHF sensor (140, 240) in position with regards to the view port (6, 206), and
- at least one first locking body (130, 231, 232) suitable for locking in position the holding part (120, 220) on the attachment element (110, 210) when the holding part (120, 220) is placed in the opening (119, 219) of the attachment element (110, 210), said first locking body (130, 230) being configured to allow for a manual locking in position of the holding part (120, 220) in the opening (119, 219) of the attachment element (110, 210).

2. Holding system (10, 201) according to claim 1, wherein the holding system (10, 201) is designed to hold a UHF sensor (140, 240) on a view port (6, 206) protruding from the support (5), with the attachment element (110,210) being configured to be attached on the contour of the view port (6, 206).

3. Holding system (10, 201) according to claim 2, wherein the attachment element (110, 210) comprises a first and a second retaining jaw (111, 112, 211, 212, 311, 312, 411, 412, 511, 512, 611, 612) configured to be attached on the view port (6, 206) by enclosing it.

4. Holding system (10) according to any of claims 1 to 3, wherein the attachment element (110) and the holding part (120) each comprise at least one passage orifice (113a, 113b, 113c, 113d, 123a, 123b) for the passage of the first locking body (130), with the locking in position of the holding part (120) on the attachment element (110) being carried out by insertion of a portion of the first locking body (140), referred to as locking rod (133a, 133b) into said passage orifices (113a, 113b, 113c, 113d, 123a, 123b).

5. Holding system (201) according to any of claims 1 to 3, wherein the first locking body (231) is mounted mobile on the attachment element (230) between at least one first position wherein it leaves free the opening (219) in order to allow for the placing of the attachment element in said opening (219) and a second locking position in which the first locking body locks in position the holding part (220) in the opening (219) of the attachment element (210).

6. Holding system according to claims 3 and 5 taken in combination, comprising at least one second locking body (232), with the first and the second locking body (231, 232) being mounted mobile between the first and the second position on respectively the first and the second retaining jaw (211, 212).

7. Holding system (10, 201) according to any of claims 1 to 6, wherein the holding part (120, 220) is configured to house at least one portion of the UHF sensor (140, 240) hermetically enclosed when the UHF sensor (140, 240) is attached by the holding system (10, 201) on the view port (6, 206).

8. Holding system (10, 201) according to any of claims 1 to 7 wherein the attachment element comprises means for positioning in order to position the holding part (120) during the placing thereof in the opening (119).

9. Holding system (201) according to any of claims 1 to 8 wherein the holding part (220) is configured to allow for an attaching of the UHF sensor (240) when it is at least partially housed in the holding part (220).

10. Assembly of UHF sensors including:
- a UHF sensor (140, 240),
- a holding system (10, 210) the UHF sensor (140, 240) on a view port (6, 206) of a high-voltage electrical station (1), said view port (6, 206) being attached to the rest of the electrical station (1) by means of a support (5, 205), such as a flange, of the electrical station (1), the assembly **being characterised in that** the holding system (10, 201) is a system according to any of claims 1 to 6.

11. Assembly of UHF sensors according to claim 10, wherein the holding part (120, 220) delimits a housing (124, 223) for the UHF sensor (140, 240) and wherein the holding part (120, 220) and the UHF sensor (140, 240) are shaped to hermetically close the housing (124, 223) when the assembly of UHF sensors UHF is installed on the electrical station (1).

12. Assembly of UHF sensors according to claim 11, wherein the UHF sensor (140) includes a sensor body (141),
wherein the holding part (120) includes:
- a base (121) through which the holding part is placed in the opening (119), and
- a sleeve (122) extending from the base and delimiting a housing (124) for the sensor body (141) having a first and second opening,
and wherein, the sensor body (141) includes a first seal (145) to be inserted between the rest of the sensor body and the wall of the housing (124) in such a way as to hermetically close the first opening of the housing (124),
the base (121) including a second seal (125) arranged to bear against the surface of the view port (6) in such a way as to hermetically close the second opening of the housing (124).

13. Assembly of UHF sensors according to claim 11, wherein the sensor includes a sensor body (241) and a bearing portion that extends from the sensor body (241),
wherein, the holding part (220) includes a central opening (223) for housing the sensor body (241) in such a way that during the setting in place of the UHF sensor (240) in said central opening (223), the bearing portion bears against the holding part (220),
the sensor assembly further comprising a first seal (145) to be inserted between the bearing position and the holding part and a second seal (226) to be inserted between the holding part (220) and the view port (206).

14. High-voltage electrical station (1) comprising a view port (6, 206), said view port (6, 206) being attached to the rest of the electrical station (1) by means of a support (5, 205), such as a flange, of the electrical station (1),
The electrical station (1) **being characterised in that** it further comprises a UHF sensor (140, 240) attached on said view port (6, 206) by means of a holding system (10, 210) according to any of claims 1 to 9.

15. Method for attaching a UHF sensor (140, 240) on a view port (6, 206) of a high-voltage electrical station (1), said view port (6, 206) being attached to the rest of the electrical station (1) by means of a support (5, 205), the method **being characterised in that** it comprises the following steps:
- supplying an attachment element (110, 210) and at least one first locking body (130, 231, 232),
- attaching of the attachment element (110, 210) on the electrical station (1) facing the support (5) with its opening (119, 219) giving access to the view port (6, 206) when it is attached to the electrical station (1),
- supplying a holding part (120, 220),
- partial housing of the UHF sensor (140, 240) in the holding part (120,220),
- placing of the holding part (120, 220) in the opening (119, 219) of the attachment element (110, 210) in such a way as to place and to hold the UHF sensor (140, 240) in position with regards to the view port (6, 206),
- manual locking in position of the holding part (120, 220) in the opening (119, 219) of the attachment element (110, 210) by means of the first locking body (130, 231, 232).
